# EUROPEAN PATENT APPLICATION

(11) **EP 2 913 773 A1**
(43) Date of publication of application: **02.09.2015**
(21) Application number: 14305278.5
(22) Date of filing: 27.02.2014
(51) Int. Cl.: G06F 21/14

(54) **Run-time Continuous Address Space Layout Randomization of flattened Control Flow Graph**

(71) Applicant: Thomson Licensing, 92130 Issy-les-Moulineaux (FR)
(72) Inventor: Monsifrot, Antoine, 35576 Cesson-Sévigné (FR); Salmon-Legagneur, Charles, 35576 Cesson-Sévigné (FR)
(74) Representative: Huchet, Anne

(57) **Abstract**

It is provided a method for hardening of control flow graph flattening, wherein the control flow graph is flattened, and each Basic Block is stored on a slot, comprising the steps of: selecting an available slot each after executing a Basic Block; selecting a random start offset inside the slot; copying the Basic Block at the start offset in the slot; inserting at least one junk code at least one of before, after and inside the Basic Block on the basis of a reference image of the Basic Block; and updating a database including an current address and image of each Basic Block.

## Description

### FIELD OF THE INVENTION

The present invention relates to a software protection improvement, and more particularly related to a method and a system for hardening of control flow graph flattening.

### BACKGROUND OF THE INVENTION

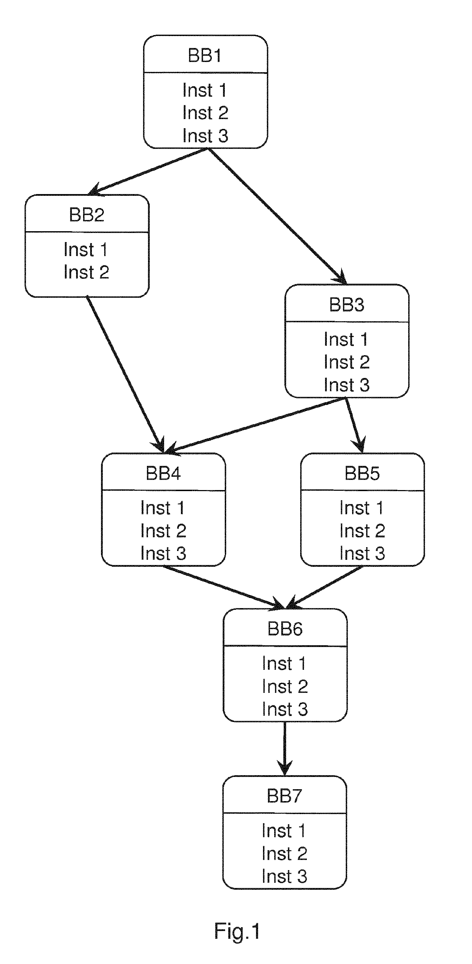

In a Control Flow Graph (CFG) representing software, the nodes are some pieces of code called basic blocks; and edges correspond to jumps between basic blocks. A basic block (BB) has only one entry point and one exit point. There is no jump instruction to a destination anywhere in the program within a basic block; and only the last instruction can jump to another basic block. This representation is very useful to understand a program. Fig. 1 presents a CFG example.

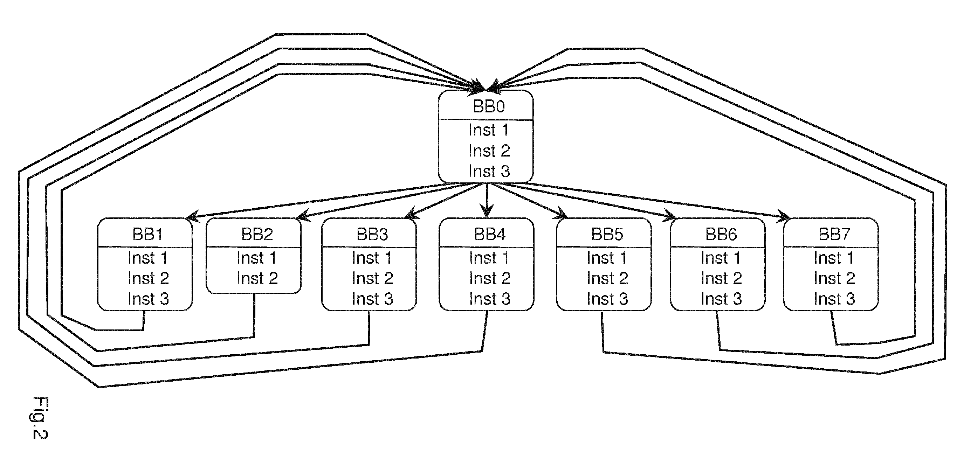

CFG flattening is an obfuscation transformation to increase the complexity of the code. The goal of CFG flattening is to hide the original layout of the CFG. To implement this, the program is modified in a way that each basic block jumps to a single function that computes the address of the next basic block. Fig. 2 presents the CFG of Fig. 1 after the CFG flattening. This technique has been presented by Wang, C., Davidson, J., Hill, J., & Knight, J. (2001, July), Protection of software-based survivability mechanisms, In Dependable Systems and Networks, 2001. DSN 2001, International Conference on (pp. 193-202). IEEE.

Usually using dynamic analysis it is quite easy to rebuild the original control flow graph. Indeed, it is possible to trace one or several executions of the protected software. Then an attacker sees that some Basic Blocks marked using their address are always executed after some others. Thus the attacker is able to rebuild the corresponding part of the CFG. This technique just allows rebuilding the part of the CFG that is executed using the parameters chosen by the attacker; however this is often enough to rebuild the interesting part of the CFG. There is therefore a need to prevent such an attacker from marking the basic blocks.

Another problem to solve is to resist to more advanced pattern matching attacks. Usually attackers use the start address of a basic block to mark them. Experimented hackers may find other techniques, like the signature of the basic block (ex: sha1). A problem to solve then is to use basic blocks that dynamically change in position and in content to resist to all kind of pattern matching.

### SUMMARY OF THE INVENTION

According to an aspect of the present invention, it is provided a method for hardening of control flow graph flattening, wherein the control flow graph is flattened, and each Basic Block is stored on a slot, comprising the steps of: selecting an available slot each after executing a Basic Block; selecting a random start offset inside the slot; copying the Basic Block at the start offset in the slot; inserting at least one junk code at least one of before, after and inside the Basic Block on the basis of a reference image of the Basic Block; and updating a database including an current address and image of each Basic Block.

In a first preferred embodiment, in each of the two steps of selecting, the available slot and the random start offset are selected randomly.

In a second preferred embodiment, each of the two steps of selecting is implemented on the basis of the database further including a list of possible successors.

In a third preferred embodiment, the reference image of the Basic Block is included in the database or computed on the basis of the current image of the Basic Block.

In a fourth preferred embodiment, a dispatcher, which is connected to all other Basic Blocks, jumps to any address between 0 and the start offset of a target slot when a Basic Block is executed.

According to an aspect of the present invention, it is provided a computer program product downloadable from a communication network and/or recorded on a medium readable by computer and/or executable by a processor, comprising program code instructions for implementing the steps of foregoing method.

According to an aspect of the present invention, it is provided non-transitory computer-readable medium comprising a computer program product recorded thereon and capable of being run by a processor, including program code instructions for implementing the steps of foregoing method.

According to another aspect of the present invention, it is provided a system for hardening of control flow graph flattening, wherein the control flow graph is flattened, and each Basic Block is stored on a slot, comprising a processor to implement the steps of: selecting an available slot each after executing a Basic Block; selecting a random start offset inside the slot; copying the Basic Block at the start offset in the slot; inserting at least one junk code at least one of before, after and inside the Basic Block on the basis of a reference image of the Basic Block; and updating a database including a current address and image of each Basic Block.

In a first preferred embodiment, in each of the two steps of selecting, the available slot and the random start offset are selected randomly.

In a second preferred embodiment, each of the two steps of selecting is implemented on the basis of the database further including a list of possible successors.

In a third preferred embodiment, the reference image of the Basic Block is included in the database or computed on the basis of the current image of the Basic Block.

In a fourth preferred embodiment, a dispatcher, which is connected to all other Basic Blocks, jumps to any address between 0 and the start offset of a target slot when a Basic Block is executed.

It is to be understood that more aspects and advantages of the invention will be found in the following detailed description of the present invention.

### BRIEF DESCRIPTION OF THE DRAWINGS

The accompanying drawings, which are included to provide a further understanding of the invention and are incorporated in and constitute a part of this application, will be used to illustrate an embodiment of the invention, as explained by the description. The invention is not limited to the embodiment.

In the drawings:
Fig. 1 is a diagram illustrating classic Control Flow Graph;
Fig. 2 is a diagram illustrating Control Flow Graph Flattening;
Fig. 3 is a diagram illustrating robust Control Flow Graph Flattening according to the embodiment of the present invention;
Fig. 4 is a diagram illustrating how at least one dummy instruction is inserted to a Basic Block according to the embodiment of the present invention;
Fig. 5 is a diagram illustrating an exemplary system on which the present invention is implemented; and
Fig 6 is an exemplary flow chart implemented by the present invention.

### DETAILED DESCRIPTION OF PREFERRED EMBODIMENTS

In the following description, various aspects of an embodiment of the present invention will be described. For the purpose of explanation, specific configurations and details are set forth in order to provide a thorough understanding. However, it will also be apparent to one skilled in the art that the present invention may be implemented without the specific details present herein.

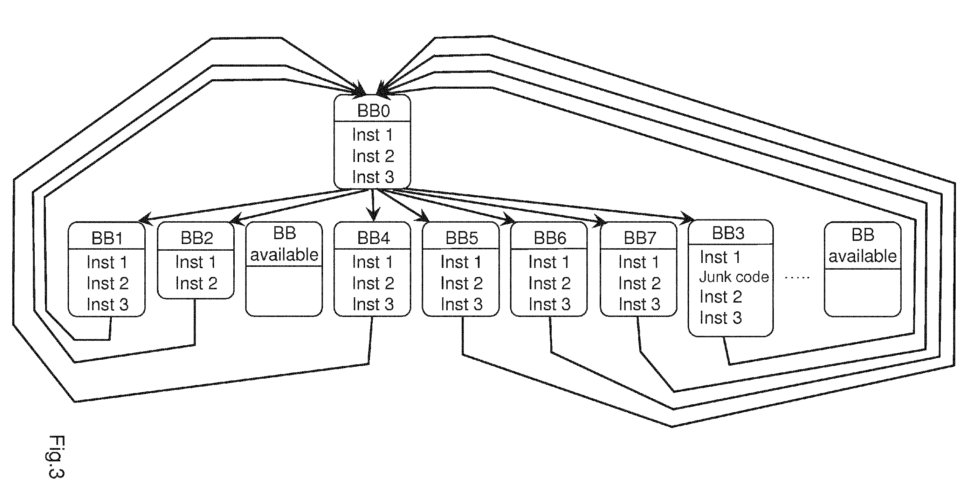

As described above, Fig. 1 illustrates classic Control Flow Graph (CFG); Fig. 2 presents the CFG of Figure. 1 after the CFG flattening. The main idea of the invention is to copy each Basic Block (BB) to another address after its execution as described in Fig. 3. To implement this, some small memory slots are allocated. The size of these slots does not need to be larger than that of the largest BB of the program. To avoid pattern matching attacks, each time a BB is copied to a slot, the slot destination and the BB start address inside the slot are changed; and some junk codes are inserted inside the BB. In this way, each copy of a BB produces a new BB, whose position, length and content vary over time. In Fig.3, BB3 has been executed and moved after BB7 and some junk codes have been added in it. The process of a BB relocation involves several steps:
- selecting randomly an available slot each after executing a BB;
- selecting a random start offset inside the slot;
- copying the BB at the start offset.
- inserting some junk codes before and after the BB, so that the start and the end of the BB is less detectable.

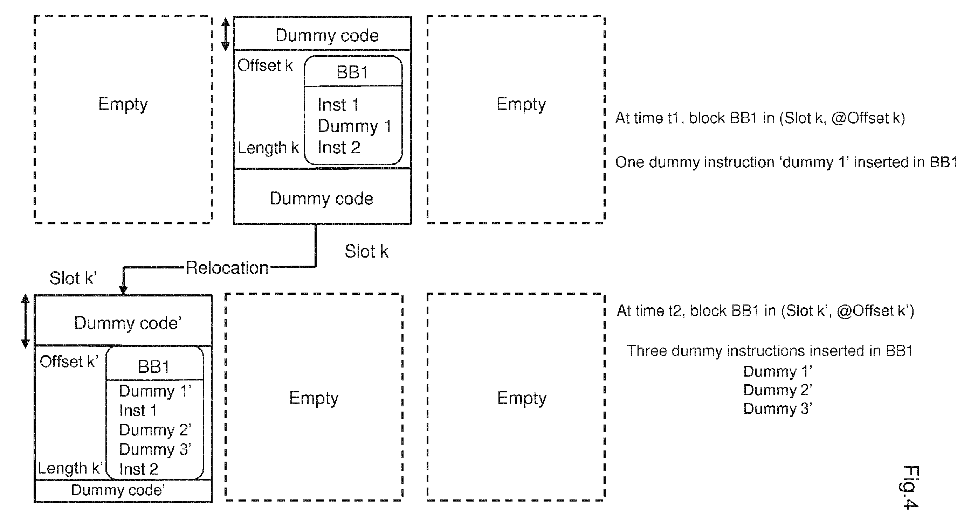

The available slot and the random start offset, the junk code, and the position of the junk code may be selected on the basis of a database. They are also determined by computing according to a function or an algorithm stored on the database. In the step of inserting, some junk codes are also inserted inside the BB, in order to change its signature and detectability as shown in Fig. 4. In Fig. 4, at the time of t1, block BB1 is in the Slot k with Offset k. One dummy instruction "dummy 1" is inserted between instructions 1 and 2 in BB1. After executing the BB1, at the time of t2, the block BB1 is copied to Slot k' with Offset k'. The Slot k' and Offset k' are selected on the basis of the database or computed as described above. In the revised BB1, three dummy instructions "dummy 1'", "dummy 2"', and "dummy 3"' are inserted before and inside the BB1. The positions and contents of these dummy instructions are determined on the basis of a reference image of the BB. The reference image of the BB is included in the database or computed on the basis of the current image of the BB. By this obfuscation, BBs can dynamically change in position, length, and content to resist to all kind of pattern matching.

It is important for a central actor to keep track of BB relocations. The central actor must store the address of each BB, e.g. its slot number and its offset inside the slot. A simple way to implement this protection is to use a data base containing for each BB its current address and the list of possible successors. The database also contains a reference image of the BB for next transformations, or a function or an algorithm to compute a reference image from the current BB image. One solution is to store in the database the address of dummy code insertions done on the reference image.

On the diagram, the top level BB that is connected to all others BBs is called a Dispatcher. Once a BB is executed, the database is updated and the Dispatcher is called. The next time when the dispatcher needs to execute the same BB, it can retrieve from the database its new address. When a Dispatcher jumps to a relocated BB, it can jump to any address in the first dummy code area, before the start of the BB. To implement that, it picks a random value between [0, Offset k] where Offset k is the relative offset of the BB in the target slot.

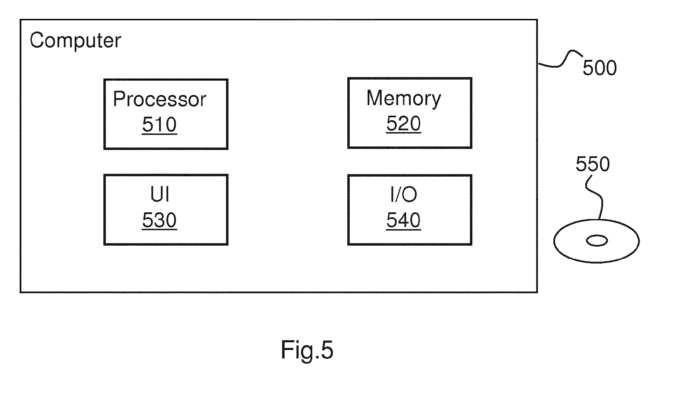

Fig. 5 illustrates an exemplary system ("computer") 500 on which the invention may be implemented. The computer 500 can be any kind of suitable computer or device capable of performing calculations, such as a standard Personal Computer (PC). The computer 500 comprises at least one processor 510, RAM memory 520, a user interface 530 for interacting with a user, and a second interface 540 for reading a software program for performing the method of the invention from a digital data support 550. The skilled person will appreciate that the illustrated computer is very simplified for reasons of clarity and that a real computer in addition would comprise features such as network connections and persistent storage devices.

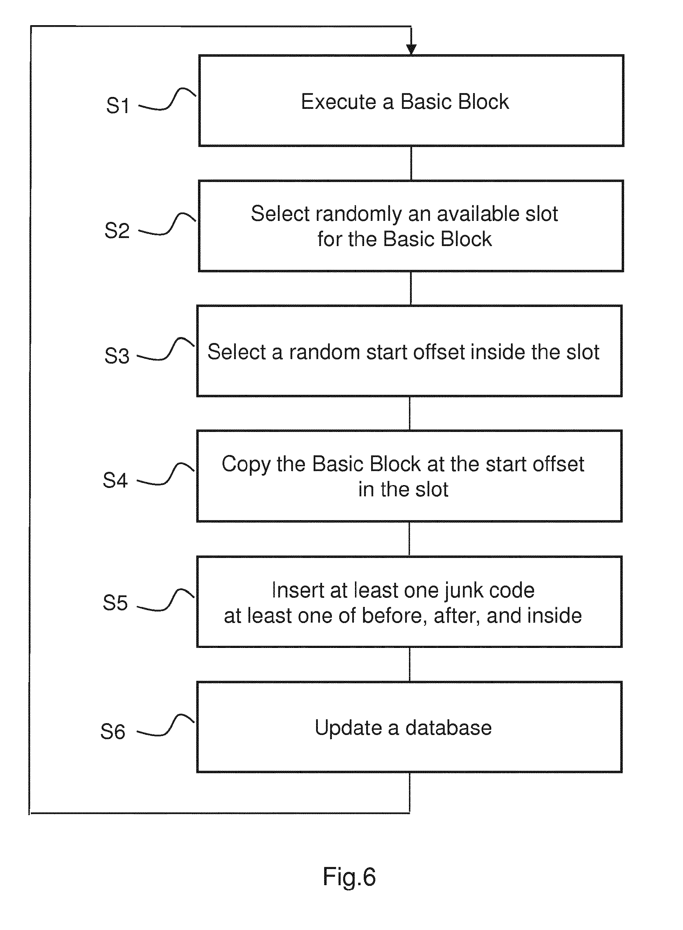

Fig. 6 illustrates an exemplary flow chart implemented by the present invention. The method is performed by the processor 510 and the different parts (functions and modules) of code are stored in the memory 520. At the step of S1, one of BBs except a dispatcher is executed. After the execution, at step S2, an available slot for the BB is selected to relocate the position of the BB. It is implemented on the basis of a database including current address of each BB and possible successors. Alternatively, the slot is determined by computing in a way stored in the database. At S3, a random start offset inside the slot is selected on the basis of a reference image of the BB. The reference image of the BB is included the database or computed on the basis of the current image of the BB. At S4, the BB is copied at the start offset in the slot. By this copy, the position of BB is dynamically changed. At step of S5, at least one junk code is inserted at least one of before, after, and inside the BB. By this insertion the length and content of the BB are dynamically changed. Since the data relating to the BB has changed, the database is updated accordingly. The steps of S1 to S6 are executed for each execution of a BB except for the dispacher, and therefore the position, length, and content of each BB vary over time. It should be noted that any kind of well-known method will be apply to the way to determine an available slot, a random start offset, a junk code, and a position of the juck code.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application and are within the scope of the invention as defined by the appended claims.

## Claims

1. A method for hardening of control flow graph flattening, wherein the control flow graph is flattened, and each Basic Block is stored on a slot, comprising the steps of:
selecting an available slot each after executing a Basic Block;
selecting a random start offset inside the slot;
copying the Basic Block at the start offset in the slot;
inserting at least one junk code at least one of before, after and inside the Basic Block on the basis of a reference image of the Basic Block; and
updating a database including a current address and image of each Basic Block.

2. The method according to claim 1, wherein, in each of the two steps of selecting, the available slot and the random start offset are selected randomly.

3. The method according to claim 1 or 2, wherein each of the two steps of selecting is implemented on the basis of the database further including a list of possible successors.

4. The method according to one of claims 1 to 3, wherein the reference image of the Basic Block is included in the database or computed on the basis of the current image of the Basic Block.

5. The method according to one of claims 1 to 4, wherein a dispatcher, which is connected to all other Basic Blocks, jumps to any address between 0 and the start offset of a target slot when a Basic Block is executed.

6. A system for hardening of control flow graph flattening, wherein the control flow graph is flattened, and each Basic Block is stored on a slot, comprising a processor to implement the steps of:
selecting an available slot each after executing a Basic Block;
selecting a random start offset inside the slot;
copying the Basic Block at the start offset in the slot;
inserting at least one junk code at least one of before, after and inside the Basic Block on the basis of a reference image of the Basic Block; and
updating a database including a current address and image of each Basic Block.

7. The system according to claim 6, wherein, in each of the two steps of selecting, the available slot and the random start offset are selected randomly.

8. The system according to claim 6 or 7, wherein each of the two steps of selecting is implemented on the basis of the database further including a list of possible successors.

9. The system according to one of claims 6 to 8, wherein the reference image of the Basic Block is included in the database or computed on the basis of the current image of the Basic Block.

10. The system according to one of claims 6 to 9, wherein a dispatcher, which is connected to all other Basic Blocks, jumps to any address between 0 and the start offset of a target slot when a Basic Block is executed.

11. Computer program product downloadable from a communication network and/or recorded on a medium readable by computer and/or executable by a processor, comprising program code instructions for implementing the steps of a method according to at least one of claims 1 to 5.

12. Non-transitory computer-readable medium comprising a computer program product recorded thereon and capable of being run by a processor, including program code instructions for implementing the steps of a method according to at least one of claims 1 to 5.
